# EUROPÄISCHE PATENTSCHRIFT

(11) **EP 3 959 656 B1**
(45) Veröffentlichungstag und Bekanntmachung des Hinweises auf die Patenterteilung: **20.11.2024**
(21) Anmeldenummer: 20722495.7
(22) Anmeldetag: 17.04.2020
(51) Int. Cl.: G06K 19/04, G06K 19/077, E05B 19/24, G07C 9/00

(54) **PASSIVE FUNKÜBERTRAGUNGSEINRICHTUNG FÜR MECHANISCHE SCHLÜSSEL**
PASSIVE RADIO TRANSMISSION DEVICE FOR MECHANICAL KEYS
DISPOSITIF PASSIF DE TRANSMISSION RADIO POUR CLÉS MÉCANIQUES

(30) Priorität: 23.04.2019 DE 102019110509
(43) Veröffentlichungstag der Anmeldung: 02.03.2022
(73) Patentinhaber: AEG Identifikationssysteme GmbH, 89081 Ulm (DE)
(72) Erfinder: KNAPICH, Norbert, 87672 Rosshaupten (DE)
(74) Vertreter: Baur & Weber Patentanwälte PartG mbB
(86) Internationale Anmeldenummer: PCT/EP2020/060814
(87) Internationale Veröffentlichungsnummer: WO 2020/216683

(56) Entgegenhaltungen:
- WO-A1-2006/053692
- WO-A1-2018/110512
- US-A1- 2005 242 959
- US-A1- 2006 044 109
- US-A1- 2014 184 462
- US-A1- 2018 276 522

## Beschreibung

Die Erfindung betrifft eine Funkübertragungsvorrichtung mit einer passiven Funkübertragungseinrichtung sowie ein Verfahren zum Umrüsten eines mechanischen Schlüssels mittels einer passiven Funkübertragungseinrichtung.

Auf Funk basierende Zugangskontrollsysteme, wie beispielsweise RFID-Systeme (Englisch für radio-frequency-identification), haben zwischenzeitig mechanische Schlüssel in weiten Bereichen abgelöst. Gründe hierfür sind unter anderem, dass sich bei Funkübertragungseinrichtungen Zugangsberechtigungen bequem erteilen oder widerrufen lassen. Gegenüber konventionellen mechanischen Schlüsseln müssen diese somit nicht mechanisch umgearbeitet werden. Ebenso müssen bei einer Erweiterung oder Reduzierung von Zugangsrechten Schlüssel nicht ausgegeben oder eingezogen werden. In gewissen Bereichen ist es jedoch notwendig, dass parallel zu funkgestützten Zugangsüberwachungssystemen mechanische Schlüsselsysteme betrieben werden. Beispielsweise für den Zugang in Bereiche, die auch noch während eines Stromausfalls oder eines Ausfalls des elektronischen Zugangskontrollsystems zugänglich sein müssen, werden mechanische Türschließsysteme benötigt.

Die Kombination von RFID-Sendern mit mechanischen Schlüsseln ist aus dem allgemeinen Stand der Technik bekannt.

Die WO 2006/031822, die ein als DE 60 2005 004 930 T2 veröffentlichtes Familienmitglied hat, gibt einen RFID-Chip an, der auf einer Seite eines Schlüssel entlang dessen Schafts oder dessen Reide angeordnet werden kann, um den Schlüssel zu einem Funkschlüssel zu erweitern.

Ähnlich offenbart die US 2006 / 0044109 die Markierung von Schlüsselreiden mit RFID-Tags. H

Aus der US 6,637,245 B1 ist ein RFID-Sender bekannt, der in einer Durchgangsbohrung einer Schlüsselreide eingebracht und fixiert wird. Zur Erweiterung des mechanischen Schlüssels wird dieser mit einer seine Reide durchdringenden Durchgangsbohrung versehen, in die der RFID-Sender mit einem Halter aus Kunststoff eingeschmolzen wird.

Die WO 2006/053692, gegen die Anspruch 1 abgegrenzt ist, zeigt eine Hochfrequenz-Identifizierungsvorrichtung, die an einem Objekt anbringbar und durch eine Fernlesevorrichtung identifizierbar ist, mit einem Resonanzkreis, der zum Zusammenwirken mit der Fernlesevorrichtung geeignet ist. Der Resonanzkreis umfasst ein erstes Resonanzkreiselement und ein zweites Resonanzkreiselement, die durch elektrische Verbindungselemente elektrisch in Reihe miteinander verbunden und aufeinander faltbar sind.

Die US 2018 / 0276522 zeigt eine elektronische Vorrichtung zur Authentifizierung einer Flasche, deren Hals durch einen mit einer Kappe abgedeckten Stopfen verschlossen ist. Die Vorrichtung zur Authentifizierung ist zwischen der Flasche und der Kappe angeordnet, wobei eine elektronische Schaltung Folgendes umfasst: einen flexiblen isolierenden Träger mit mindestens einem leitenden Draht, der Leiterbahnen bildet, sowie einen elektronischen Chip, der Identifikationsdaten für die Flasche speichert, sowie eine Antenne zur Übertragung der Identifikationsdaten an ein externes Lesegerät, wenn sich die Antenne im Erfassungsbereich des Lesegeräts befindet, sowie eine Einheit zum Erkennen des Durchstoßens eines Stopfens, der den Flaschenhals zumindest teilweise bedeckt, wenn die Vorrichtung zwischen der Flasche und der Kappe positioniert ist. Die Leiterbahnen der Schaltung sind elektrisch mit dem elektronischen Chip verbunden, wobei der elektronische Chip so konfiguriert ist, dass er feststellt, dass der Stopfen entfernt und/oder durchstoßen worden ist, wenn die elektrische Verbindung mit der Einheit zum Erkennen des Durchstoßens des Stopfens unterbrochen worden ist.

Die US 2008/0231421 A1 zeigt eine Leseantenne, ein mit der Leseantenne gekoppeltes Lesegerät und ein RFID-Etikett mit einer Antenne, das elektromagnetisch mit der Leseantenne gekoppelt ist.

Die DE 10 2006 009 802 A1 zeigt einen RFID-Transponder mit mindestens zwei Antennen, die in einem Winkel zueinander angeordnet sind. Dies ermöglicht eine einfache Lesbarkeit des RFID-Transponders z, da immer mindestens eine der beiden Antennen in einem geeigneten Winkel zur Leseeinrichtung angeordnet ist.

Die EP 1714 239 B1 zeigt einen gewölbten, verkapselten RFID-Tag.

Funkbasierte Zugangskontrollsysteme umfassen üblicherweise einen Sender und einen Empfänger. Im Falle von RFID-Systemen nehmen die RFID-Antennen elektromagnetische Wellen des Empfängers auf, was einen Induktionsstrom in ihren Spulen hervorruft, sodass ein Signal des häufig als Funketikett bezeichneten Senders an den Empfänger übertragen werden kann. Um elektromagnetische Wellen eines Empfängers empfangen zu können oder elektromagnetische Wellen an den Sender aussenden zu können, ist folglich eine bestimmte räumlichen Orientierung zwischen dem Sender und dem Empfänger erforderlich, die eine direkte Funkübertragung ermöglicht. Insbesondere wenn die Sender auf elektrisch leitenden Oberflächen angeordnet werden, wird die Funkübertragung durch Wirbelströme in diesen Oberflächen sowie durch Reflexionen und Interferenz stark beeinträchtigt.

Bei größeren Büro- oder Wohnhäusern wird oftmals eine Vielzahl an Schlüsseln mit unterschiedlichen Berechtigungen ausgegeben. Eine Nachrüstung bereits bestehender Schließanlagen mit Funkübertragungseinrichtungen war bisher auf wirtschaftliche Weise nicht möglich. Aus Gründen des Kopierschutzes sollen jedoch mechanische Schlüssel aufgrund von Herstellervorgaben nicht nachträglich bearbeitet werden, so dass ein Einsatz der oben zitierten bekannten Schlüsseln mit Funkübertragungseinrichtungen nur bei einer Neuanschaffung möglich ist. Insbesondere dann, wenn die Funkübertragungseinrichtung beidseitig aktiviert werden kann, ist ein Nachrüsten bestehender Schließanlagen nicht möglich.

Allgemein besteht bei der Identifikation von Objekten auf elektrisch leitenden Oberflächen oder im Bereich von elektrisch leitenden Oberflächen das Problem, dass diese Objekte oder Oberflächen das Auslesen des Transponders erschweren oder sogar verhindern.

Die US 2007/0080233 A1 gibt einen RFID-Transponder mit zwei oder mehr Antennen-Etiketten an, die um eine Kommunikationseinheit angeordnet sind, wobei die Antennen-Etiketten und die Kommunikationseinheit mit einer dielektrischen Schicht versehen sind, die die Wechselwirkung mit umliegenden Objekten oder der Oberfläche, auf der der Transponder angeordnet ist reduziert, sodass die Sendeleistung aktiver und passiver Transponder verbessert wird.

Aus dem allgemeinen Stand der Technik ist es bekannt, elektrisch leitende Objekte, die einer Identifikation unterzogen werden wollen mit mehreren auf unterschiedlich ausgerichteten Teilflächen angeordneten RFID-Transpondern zu versehen.

Für aktive Transponder, die mit einer eigenen Energieversorgung versehen sind, ist die Orientierung gegenüber dem Empfänger häufig von nachrangiger Bedeutung, weil zum Senden von Informationen ausreichend Energie vorhanden ist und die elektromagnetische Welle von der Funkübertragungseinrichtung mittels Reflexion an umliegenden Oberflächen zum Empfänger geleitet wird. Passive Funkübertragungseinrichtungen hingegen sind bezüglich ihrer Orientierung im Raum gegenüber dem Empfänger störanfälliger und erhalten bei der Anordnung im Funkschatten elektrisch leitender Objekte häufig nicht genügend Feldenergie, die sie zum Senden ihrer Informationen in elektrische Energie umwandeln können.

Der Erfinder hat sich nun die Aufgabe gestellt, eine verbesserte passive Funkübertragungseinrichtung zur Anordnung auf einem Schlüssel als elektrisch leitendem Träger anzugeben.

Diese Aufgabe wird durch die unabhängigen Patentansprüche gelöst. Weitere vorteilhafte Ausgestaltungen der Erfindung sind jeweils Gegenstand der Unteransprüche. Diese können in technologisch sinnvoller Weise miteinander kombiniert werden.

Gemäß der Erfindung wird eine Funkübertragungsvorrichtung mit einer passiven Funkübertragungseinrichtung angegeben. Die Funkübertragungseinrichtung ist auf einer Vorderseite und einer Rückseite einer elektrisch leitfähigen Trägerplatte angeordnet, wobei die Funkübertragungseinrichtung auf der Vorderseite der Trägerplatte eine erste Folie mit einer ersten Antenne und einem mit der ersten Antenne gekoppelten Mikrochip umfasst und auf der Rückseite eine zweite Folie mit einer zweiten Antenne umfasst. Die erste Folie ist mit der zweiten Folie über einen flexiblen Steg verbunden, der um eine die Vorderseite mit der Rückseite verbindenden Stirnseite der Trägerplatte geführt ist, so dass die zweite Antenne über wenigstens eine entlang des Steges verlaufenden Verbindungsleitung mit der ersten Antenne oder dem Mikrochip verbunden ist, um Information vom Mikrochip sowohl anhand der ersten Antenne als auch der zweiten Antenne zu übertragen, wobei die erste Folie, die zweite Folie und der Steg als ein Bauteil zusammengefasst sind. Nach der Erfindung ist ein Schlüssel mit einer Schlüsselreide, die die Trägerplatte ist, vorgesehen. Eine Schicht zum Leiten des magnetischen Flusses, die als Ferritfolie ausgebildet ist, ist zwischen der Trägerplatte und der Funkübertragungseinrichtung angeordnet.

Die Funkübertragungseinrichtung kann insbesondere als passiver RFID-Sender ausgebildet sein, wobei derartige Funkübertragungseinrichtungen häufig als Transponder bezeichnet werden. Demnach ist eine Funkübertragungseinrichtung angegeben, die zwei auf gegenüberliegenden Seiten einer elektrisch leitenden Trägerplatte anordenbare Folien mit zwei auf diesen Folien aufgebrachten oder eingebrachten Antennen umfasst. Durch die Anordnung dieser Funkübertragungseinrichtung auf mehreren unterschiedlich ausgerichteten Seiten einer elektrisch leitenden Trägerplatte, wie beispielsweise einem Schlüsselanhänger, einem metallischen Werkstück oder einem mechanischen Schlüssel, wird die Sendung und der Empfang von Informationen zwischen der Funkübertragungseinrichtung und einem Empfänger von der räumlichen Orientierung unabhängig, so dass die Funkübertragungseinrichtung auf beiden Seiten der elektrisch leitenden Trägerplatte ihre Funktion ausüben kann.

Ein passiver Transponder ist ein elektronisches Kennzeichnungsmedium und benötigt keine Batterie. Er hat deshalb eine nahezu unbegrenzte Lebensdauer und kann unabhängig vom Lesewinkel, Licht oder anderen Umwelteinflüsse durch alle nicht elektrisch leitenden Materialien hindurch gelesen werden. Metallische Oberflächen, beziehungsweise allgemeiner ausgedrückt elektrisch leitende Objekte, schirmen das elektromagnetische Feld zum Auslesen des Transponders allerdings ab. Zum Auslesen der Transponder baut das Lesegerät ein elektromagnetisches Feld auf. Innerhalb dieses Feldes wird der Transponder aktiviert und sendet seine Information, ebenfalls mittels elektromagnetischer Wellen, zurück. Die Information wird vom Lesegerät erfasst, dekodiert und auf einem Display dargestellt und /oder für die weitere Datenverarbeitung an einer Schnittstelle bereitgestellt. Das System besteht grundsätzlich aus zwei Komponenten, der mobilen oder stationären Leseeinheit und der Funkübertragungseinrichtung, die als Transponder bezeichnet wird. Die Informationen werden mittels Radiowellen ausgelesen.

Die passiven Eigenschaften der Funkübertragungseinrichtung ergeben sich dadurch, dass diese nur Senden kann, wenn mindestens eine der beiden Antennen im elektromagnetischen Feld eines Empfängers angeordnet, beziehungsweise auf dieses ausgerichtet ist, da andernfalls ein Induktionsstrom fehlt, der den Sendebetrieb ermöglicht.

Der Vorteil der erfindungsgemäßen passiven Funkübertragungseinrichtung liegt darin, dass die Trägerplatte nicht mechanisch umgearbeitet werden muss, um eine Funkübertragung auf beiden Seiten des Schlüssels zu ermöglichen. Insbesondere ist es nicht notwendig eine Aussparung in der Trägerplatte zu bilden, um die Sendung und den Empfang auf beiden Seiten der Trägerplatte zu ermöglichen, oder mehrere voneinander unabhängige Transponder auf der Oberfläche anzuordnen. Außerdem können elektromagnetische Wellen des Empfängers, durch die in der Funkübertragungseinrichtung ein Induktionsstrom erzeugt wird, aus mehreren Richtungen aufgenommen werden, sodass eine zuverlässigere und von der Orientierung der Trägerplatte im Raum nahezu unabhängige Kommunikation zwischen der Funkübertragungseinrichtung und einem Empfänger ermöglicht wird.

Beispielsweise bei der Teileidentifikation mittels RFID-Transpondern kommt es häufig zu Problemen bei der Identifikation, da der Empfänger das Signal des Transponders bedingt durch die elektrische Leitfähigkeit des Bauteils, also der Trägerplatte, nicht erkennen kann. Dies gilt insbesondere dann, wenn der Empfänger im Funkschatten des Transponders angeordnet ist. Die erfindungsgemäße Funkübertragungseinrichtung löst dieses Problem nun dadurch, dass sie als durchgehendes Bauteil auf zwei Seiten der Trägerplatte angeordnet wird.

Der Mikrochip ist einmalig oder mehrfach mit Informationen über Zugangsberechtigungen oder Teilemerkmalen bespielbar.

Bezogen auf den Fall, dass die Trägerplatte die Schlüsselreide eines Schlüssels oder ein Schlüsselanhänger ist, befindet sich der Empfänger der Funkübertragungseinrichtung häufig im Bereich eines Türschlosses und aktiviert, wenn die Funkübertragungseinrichtung mit entsprechenden Rechten versehen wurde, einen elektrischen Motor, der ein Schloss öffnet, sodass sich eine Türe öffnen lässt. Die entsprechenden Zugangsinformationen können auf dem Mikrochip gespeichert werden. Dabei ist es möglich, den Mikrochip so auszuführen, dass dieser entweder ein einziges Mal oder mehrere Male mit Zugangsinformationen versehen werden kann.

Die erste Antenne und die zweite Antenne sind idealerweise spiralförmig angeordnet, sodass ein Induktionsstrom besonders vorteilhaft generiert werden kann. Die erste Antenne und die zweite Antenne sind darüber hinaus entweder auf die erste Folie und die zweite Folie aufgedruckt oder in diese eingelassen. Der Mikrochip sitzt idealerweise im Zentrum der ersten Antenne, sodass sich die Spirale der ersten Antenne, ausgehend vom Zentrum der ersten Folie nach außen erstreckt. Nach einer bestimmen Anzahl an Windungen auf der ersten Folie verläuft die Leitung der ersten Antenne über die Leitungsverbindung im Steg zur zweiten Antenne. Die über den Steg laufende, von der ersten Antenne ausgehende Verbindungsleitung, führt in den Bereich des Zentrums der zweiten Antenne, sodass auch diese von innen nach außen gebildet wird. Am Ende der Spirale der zweiten Antenne führt diese über eine Verbindungsleitung wieder über den Steg zurück zum Mikrochip. Somit ist der Stromkreis der beiden Antennen geschlossen. Alternativ wäre es möglich, die zweite Antenne nicht von innen nach außen, sondern von außen nach innen spiralförmig zu bilden.

Die beiden Antennen können in Reihe geschaltet sein, oder zueinander in einer Parallelschaltung angeordnet werden. Bei einer Parallelschaltung können vom Mikrochip ausgehend jeweils Leitungen zur ersten Antenne und zur zweiten An-tenne führen.

Die Rückleitung vom Ende der zweiten Antennenspule zum Mikrochip ist gegenüber der ersten Antenne und der zweiten Antenne isoliert ausgeführt.

Der Steg ist flexibel ausgebildet, sodass die erste Folie gegenüber der zweiten Folie über den Steg abgewinkelt werden kann. Somit kann die Funkübertragungseinrichtung als einstückige Ausführung auf zwei Seiten einer Trägerplatte angeordnet werden. Um die über den Steg laufende Verbindungsleitung vor Beschädigungen zu schützen, ist es vorteilhaft, die Leitungsverbindung in der auf die Hochachse des Steges bezogenen neutralen Faser des Steges anzuordnen.

In einer alternativen Ausführungsform kann auf der zweiten Folie ein weiterer Mikrochip angeordnet werden, der wie bereits der erste Mikrochip auf der ersten Folie autark agiert, oder aber mit dem ersten Mikrochip auf der ersten Folie korrespondiert. So kann die Ausfallsicherheit der Funkübertragungseinrichtung gesteigert werden, wenn beide Mikrochips über dieselben auf ihnen gespeicherten Informationen verfügen. Bei Ausfall einer Antenne, beispielsweise beim Bruch des Steges, können die beiden Folien mit ihren Antennen autark senden. Alternativ können die Informationen der beiden Mikrochips aber auch unterschiedlich sein und insbesondere unterschiedliche Zugangsberechtigungen umfassen.

Gemäß einer Ausführungsform der Erfindung umfasst die passive Funkübertragungseinrichtung auf der ersten Folie oder der zweiten Folie einen Energiespeicher, der den Mikrochip mit elektrischer Energie speist.

Ein solcher Energiespeicher kann beispielsweise ein Kondensator sein. Durch einen Kondensator wird der durch den Induktionsstrom generierte Energiefluss vorrübergehend zwischengespeichert, sodass die Funkübertragungseinrichtung mit dieser Energie ihre Informationen des Mikrochips an einen Empfänger senden kann. Durch die Anordnung des Kondensators auf der zweiten Folie wird auf der ersten Folie, auf der bereits der Mikrochip angeordnet ist, Platz gespart. Vorteilhaft ist es, wenn der Kondensator im Zentrum der spiralförmigen zweiten Antenne auf der zweiten Folie angeordnet wird. Der Kondensator kann entweder in der Reihenschaltung der ersten Antenne und der zweiten Antenne angeordnet werden oder aber mit separaten Zu- und Ableitungen mit dem Mikrochip verbunden werden, wobei eine Zuleitung von den Spulen über beispielsweise eine Diode zum Kondensator führen kann. Um die Redundanz der beiden Folien mit ihren Antennen und gegebenenfalls zwei autarken Mikrochips zu steigern, oder um die Gesamtkapazität zu erhöhen, können auf beiden Folien Kondensatoren angeordnet werden.

Die Energiequelle ist dabei so ausgeführt, dass sie beim Empfang elektromagnetischer Wellen durch Induktionsströme in der ersten Antenne oder der zweiten Antenne geladen wird und diese Energie dem Mikrochip zur Übertragung von Zugangsinformationen zugeführt werden kann. Da der Kondensator in einer passiven Transponderanordnung eingesetzt wird, gibt er seine Energie an den Mikrochip zur Sendung der Informationen ungesteuert ab. Somit ist ein Schalter zum Steuern des Energieflusses von der Energiequelle her nicht vorgesehen.

Im Fall, dass auf beiden Folien Energiequellen angeordnet werden, können diese entweder mit separaten Zu- beziehungsweise Ableitungen mit dem Mikrochip verbunden werden oder aber als parallele Anordnung in der Reihenschaltung der beiden Antennen angeordnet werden. Der Vorteil einer parallelen Anordnung von Energiespeichern liegt in der größeren Ausfallsicherheit der Funkübertragungseinrichtung.

Gemäß einer weiteren Ausführungsform der Erfindung umfasst die passive Funkübertragungseinrichtung auf der ersten Folie oder der zweiten Folie einen Datenspeicher, dessen Daten vom Mikrochip ausgelesen werden können.

Auf einem Datenspeicher können entweder zusätzliche Identifikationsmerkmale gespeichert werden, oder aber die Identifikationsmerkmale ausgelagert werden, die andernfalls auf dem Mikrochip abgelegt wären. Der Mikrochip ist darauf ausgelegt die Informationen des Datenspeichers auszulesen und an den Empfänger zu senden. Entsprechend des Platzes auf der ersten Folie oder der zweiten Folie kann der Datenspeicher wie auch der Kondensator auf der ersten Folie oder der zweiten Folie angeordnet werden.

Denkbar ist auch, dass der Datenspeicher von einer Betätigungseinrichtung, wie beispielsweise einem Taster freigegeben wird, sodass ein Bediener des Schlüssels bei Bedarf über die auf dem Mikrochip gespeicherten Informationen hinaus weitere Informationen und Identifikationsmerkmale versenden kann, solange die Funkübertragungseinrichtung einen ausreichenden Induktionsstrom erzeugt, wenn sie sich im elektromagnetischen Feld eines Empfängers befindet. Die Betätigungseinrichtung regelt dabei lediglich den zusätzlichen Datenspeicher, sodass die Funktionsweise des Transponders weiterhin passiv ist.

Gemäß der Erfindung ist die passive Funkübertragungseinrichtung auf der der Trägerplatte zugewandten Seite mit der Schicht zum Leiten des magnetischen Flusses versehen, die i als Ferritfolie ausgebildet ist, die unterhalb der ersten Folie oder der zweiten Folie angeordnet ist.

Die erste Folie, die zweite Folie sowie der Steg sind üblicher Weise aus einer Polymerfolie hergestellt. Auf der Polymerfolie beziehungsweise in der Polymerfolie werden die Antennen, der Mikrochip und die weiteren vorgesehenen Bauteile angeordnet. Die Schicht zum Leiten des magnetischen Flusses wird so zwischen der Trägerplatte und der Funkübertragungseinrichtung angeordnet, dass diese die elektrisch leitfähige Trägerplatte von der Antenne trennt. Durch eine Ferritfolie wird der magnetische Fluss der Antennen beim Senden und Empfangen von der Trägerplatte weggeleitet, sodass in der Trägerplatte keine oder nur geringe Wirbelströme induziert werden, deren Rückkopplung die Sendeleistung der Antennen stört. Insbesondere können Interferenzeffekte, die während des Sendens aufkommen, durch eine Ferritfolie nahezu vollständig unterbunden werden.

Alternativ oder zusätzlich zur Anordnung der Ferritfolie können die beiden Antennen in bezüglich der Trägerplatte unterschiedlichen Richtungen gewickelt sein, oder anders formuliert über den Schlüssel gespiegelt sein, sodass sich der induzierte Wirbelstrom während des Sendens in der Trägerplatte zumindest teilweise aufhebt und negative Interferenzeffekte und Rückkopplungen vermieden werden.

Gemäß einer weiteren Ausführungsform der Erfindung ist die passive Funkübertragungseinrichtung mittels einer adhäsiven Schicht auf der Trägerplatte befestigt, die insbesondere als eine Klebefolie ausgeführt ist.

Vorteilhaft ist es die Ferritfolie und die Klebefolie im Bereich des Steges auszusparen, sodass dieser enger um die Stirnseite der Trägerplatte herumgeführt werden kann. Insbesondere kann die Lage der durch den Steg verlaufenden Leitungen an das Vorhandensein einer Klebefolie oder Ferritfolie angepasst werden, sodass die Leitungsverbindung der Antennen möglichst im Bereich der neutralen Faser des Steges liegen. Die Funkübertragungseinrichtung beziehungsweise die Schicht zum Leiten des magnetischen Flusses können aber auch mit einem Klebstoff auf der Trägerplatte verklebt werden.

Gemäß einer weiteren Ausführungsform der Erfindung ist die passive Funkübertragungseinrichtung mit einer um die Trägerplatte angeordneten Kappe versehen, wobei die Kappe die Funkübertragungseinrichtung auf der Trägerplatte hält.

Das Material der Kappe wird dabei so gewählt, dass es die Funkübertragung nicht oder nur geringfügig einschränkt. Da die Kappe die Funkübertragungseinrichtung umgibt und somit auf der Schlüsselreide hält, könnte auf die adhäsive Schicht verzichtet werden. Die Kappe schützt die Funkübertragungseinrichtung vor Beschädigungen. Bei der Umrüstung eines mechanischen Schlüssels oder eines Schlüsselanhängers werden üblicher Weise kappen auf die Schlüsselreide oder den Schlüsselanhänger aufgebracht, um die Funkübertragungseinrichtung zu schützen oder zu fixieren. Die Kappe ist vorteilhafter Weise weichelastisch oder aus einem harten Kunststoff gefertigt.

Eine weichelastische Kappe kann durch vorübergehendes Aufdehnen über die trägerplatte gezogen werden. Eine Kappe aus einem harten Kunststoff könnte aus zwei Schalen gebildet werden, die die Schlüsselreide oder den Schlüsselanhänger umgeben. Die zwei Schalen können entweder verklebt werden oder über einen Rastmechanismus miteinander verbunden werden.

Gemäß einer weiteren Ausführungsform der Erfindung sind die erste Antenne und die zweite Antenne der passiven Funkübertragungseinrichtung in Reihe geschaltet, oder die erste Antenne und die zweite Antenne der passiven Funkübertragungseinrichtung sind jeweils mit dem Mikrochip verbunden oder die erste Antenne und die zweite Antenne der passiven Funkübertragungseinrichtung parallel geschaltet.

Die Anordnung, bei der die erste Antenne und die zweite Antenne jeweils mit separaten Verbindungsleitungen mit dem Mikrochip verbunden sind, kann auch als Parallelschaltung der beiden Antennen bezeichnet werden. Die Wahl der elektrischen Schaltung hängt unter anderem von der gewünschten Ausfallsicherheit der Funkübertragungseinrichtung und von der gewünschten elektronischen Eigenschaft der Funkübertragungseinrichtung ab. So bietet eine Parallelschaltung die größere Ausfallsicherheit, weil beim Ausfall einer Antenne oder beim Bruch der Verbindungsleitung der beiden Antennen die andere Antenne noch weitersenden kann. Mit einer Reihenschaltung wird dafür eine höhere Induktivität erreicht.

Gemäß einer weiteren Ausführungsform der Erfindung ist der flexible Steg mit einer Breite gewählt, die geringfügig größer als die Leiterbahnbreite der Verbindungsleitung ausgeführt ist.

Somit ist die Verbindungsleitung zu allen Seiten hin durch den Steg vor mechanischen Schädigungen geschützt.

Gemäß der Erfindung ist die Trägerplatte eine Schlüsselreide eines Schlüssels.

Durch die Anordnung einer passiven Funkübertragungseinrichtung auf beiden Seiten einer Schlüsselreide oder eines Schlüsselanhängers können auf eine Schließanlage angepasste mechanische Schlüssel oder bereits vorhandene Schlüsselanhänger zu Transpondern umgerüstet werden, ohne, dass diese mechanisch nachgearbeitet werden müssen. Dennoch erlaubt es die erfindungsgemäße Funkübertragungseinrichtung, dass der Schlüssel oder Schlüsselanhänger mit einer beliebigen Seite auf den Empfänger ausgerichtet werden kann. Bei der Verwendung des umgerüsteten Schlüssels muss ein Bediener nicht mehr darauf achten auf welcher Seite der elektrisch leitenden Schlüsselreide der Transponder angeordnet ist, sodass die Nutzung des Schlüssels angenehmer wird.

Gemäß einer weiteren Ausführungsform der Erfindung sind die erste Folie und die zweite Folie bezüglich ihrer Abmessungen so gewählt, dass ein Ringloch in der Schlüsselreide des Schlüssels oder im Schlüsselanhänger zugänglich bleibt.

Somit kann der Schlüssel oder der Schlüsselanhänger, ohne mechanisch bearbeitet zu werden, weiterhin als mechanischer Schlüssel verwendet werden. In einer alternativen Gestaltung der ersten und zweiten Folie können diese Aussparungen für Ringlöcher aufweisen.

Gemäß einer weiteren Ausführungsform der Erfindung ist die Trägerplatte teil eines zu identifizierenden Werkstücks.

Demnach kann die Funkübertragungseinrichtung auf einem metallischen Werkstück angeordnet werden, wobei die Funkübertragungseinrichtung auf zwei Flächen des Werkstücks mit jeweils einer Folie angeordnet wird. Fährt das Werkstück innerhalb einer Produktionsstraße nun durch einen Empfänger zur Teileerkennung, ist die Lage des Werkstücks für die zuverlässige Werkstückidentifikation ohne Bedeutung, weil die Funkübertragungseinrichtung von zwei Seiten aus nahezu in den gesamten Raum senden kann. Ebenfalls kann die Funkübertragungseinrichtung auf einem metallisch leitenden Werkzeug angeordnet werden, um dessen Verwendung, Entnahme oder Zurückgabe zuverlässig durch einen Empfänger erkennen zu können.

Durch die Anordnung einer passiven Funkübertragungseinrichtung auf zwei aneinander angrenzenden aber unterschiedlich ausgerichteten Flächen wird die Zuverlässigkeit der Teileidentifikation gesteigert, weil üblicher weise mindestens eine der beiden Trägerplatten des Werkstücks auf den Empfänger ausgerichtet ist und die auf dieser Trägerplatte angeordnete Folie somit nicht im Funkschatten des Empfängers liegt.

Der flexible Steg ermöglicht dabei die Anordnung auf den benachbarten Flächen, weil die Funkübertragungseinrichtung über diesen gebogen werden kann.

Der flexible Steg ist häufig mechanischen Beanspruchungen ausgesetzt, sodass auf ihm keine sensiblen Bauteile wie der Mikrochip oder die Energiequelle angeordnet werden. Diese Bauteile würden die Flexibilität des Steges und somit die Anwendbarkeit der passiven Funkübertragungseinrichtung nachteilhaft beeinflussen.

Es wird auch ein Verfahren zum Umrüsten eines mechanischen Schlüssels angegeben, umfassend die Schritte:
- Bereitstellen eines mechanischen Schlüssels, der bezüglich seiner Funktion an eine Schließanlage angepasst ist,
- Bereitstellen einer Funkübertragungseinrichtung, die eine erste Folie mit einer ersten Antenne und einem mit der ersten An-tenne gekoppelten Mikrochip umfasst und eine zweite Folie mit einer zweiten Antenne umfasst, wobei die erste Folie mit der zweiten Folie über einen flexiblen Steg verbunden sind,
- Anordnen der ersten Folie der Funkübertragungseinrichtung auf einer Vorderseite einer Schlüsselreide des mechanischen Schlüssels,
- Anordnen der zweiten Folie der Funkübertragungseinrichtung auf der Rückseite der Schlüsselreide des mechanischen Schlüssels, wobei die erste Folie mit der zweiten Folie über einen flexiblen Steg verbunden ist, der um eine die Vorderseite mit der Rückseite verbindenden Stirnseite des Schlüssels geführt ist, so dass die zweite Antenne über wenigstens eine entlang des Steges verlaufenden Verbindungsleitung mit der ersten Antenne oder dem Mikrochip verbunden ist, um Information vom Mikrochip sowohl anhand der ersten Antenne als auch der zweiten Antenne zu übertragen wobei eine Schicht zum Leiten des magnetischen Flusses vorgesehen ist, die als Ferritfolie ausgebildet ist und die zwischen der Schlüsselreide und der Funkübertragungseinrichtung angeordnet ist, und
- Programmieren des Mikrochips der Funkübertragungseinrichtung mit einer Zugangsberechtigung.

Idealerweise wird ein Nachrüstsatz für einen mechanischen Schlüssel bereitgestellt, um diesen zu einem Transponder zu erweitern. Ein solcher Nachrüstsatz kann beispielsweise aus mehreren unterschiedlich geformten Ferritfolien, Kappen und Funkübertragungseinrichtungen bestehen, die im bereitgestellten Zustand noch nicht mit Identifikationsmerkmale bespielt sind. So kann ein Monteur, der die Funkübertragungseinrichtungen auf einem Schlüssel anordnet, entsprechend der Schlüsselform geeignete Funkübertragungseinrichtungen wählen. Insbesondere werden Löcher für Schlüsselringe ausgespart, damit diese weiterhin nutzbar bleiben.

Die Funkübertragungseinrichtung kann auf der Schlüsselreide beziehungsweise auf einer zuvor auf der Schlüsselreide angeordneten Schicht zum Leiten des magnetischen Flusses aufgeklebt oder mit einer Klebefolie angeordnet werden.

Gemäß einem weiteren Verfahrensschritt wird die Funkübertragungseinrichtung mit einer Kappe versehen.

Demnach kann nach der Anordnung der Funkübertragungseinrichtung eine Kappe auf die Schlüsselreide des Schlüssels oder den Schlüsselanhänger aufgebracht werden. Bei der Verwendung einer Kappe, die die Funkübertragungseinrichtung schützt, könnte auf das Verkleben der Funkübertragungseinrichtung verzichtet werden, weil die kappe die Funkübertragungseinrichtung auf der Schlüsselreide oder dem Schlüsselanhänger hält.

Gemäß einem weiteren Verfahrensschritt wird der Schlüsselbart des Schlüssels entfernt, sodass die Schlüsselreide einen Schlüsselanhänger bildet.

Sollte der mechanische Teil des Schlüssels folglich nicht mehr gewünscht werden, kann der Schlüssel, auf dessen Schlüsselreide eine Funkübertragungseinrichtung angeordnet ist, einfach zu einem Schlüsselanhänger umfunktioniert werden. Die Trägerplatte ist dann ein Schlüsselanhänger.

Die Erfindung wird nachfolgend unter Bezugnahme auf die Zeichnung näher erläutert, es zeigen:
- Fig. 1: eine erste Ausführungsform einer Funkübertragungseinrichtung,
- Fig. 2: eine weitere Ausführungsform der Funkübertragungseinrichtung,
- Fig. 3: eine weitere Ausführungsform der Funkübertragungseinrichtung, angeordnet auf einem Schlüssel,
- Fig. 4: die Funkübertragungseinrichtung und den Schlüssel aus Fig. 3 in einer geschnittenen Darstellung,
- Fig. 5: eine weitere Ausführungsform einer Funkübertragungseinrichtung, angeordnet auf einem Schlüssel,
- Fig. 6: die Funkübertragungseinrichtung und den Schlüssel aus Fig. 5 in einer geschnittenen Darstellung mit einer Kappe, und
- Fig. 7: die Funkübertragungseinrichtung auf einer Trägerplatte, die Teil eines Werkstücks ist, innerhalb einer Empfängereinrichtung.

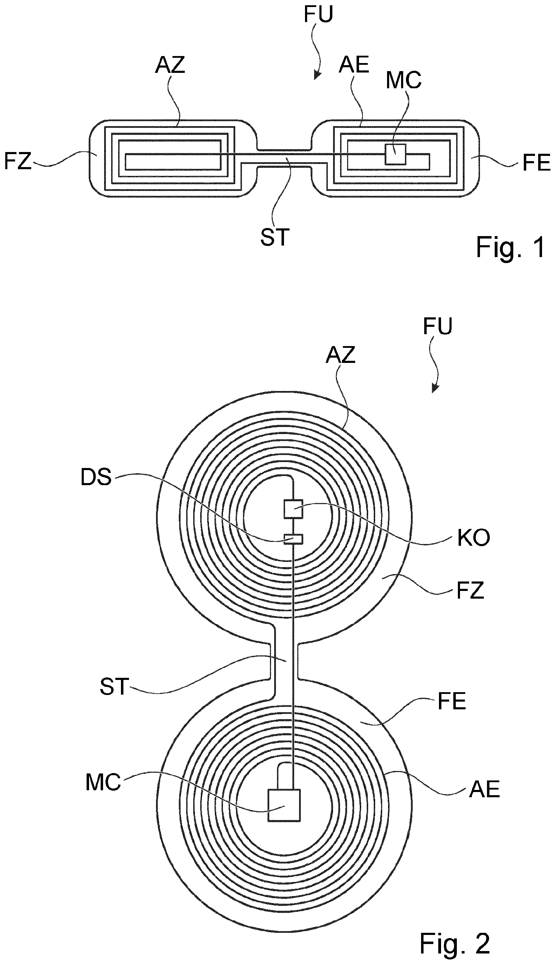

Figur 1 zeigt eine passive Funkübertragungseinrichtung FU mit einer ersten Folie FE, auf der eine erste Antenne AE angeordnet ist und einer zweiten Folie FZ, auf der eine zweite Antenne AZ angeordnet ist. Die erste Folie FE und die zweite Folie FZ sind über einen Steg ST miteinander verbunden. Über den Steg ST hinweg sind die erste Antenne AE und die zweite Antenne AZ mittels einer Verbindungsleitung verbunden. Im Zentrum der ersten Antenne AE ist auf der ersten Folie FE ein Mikrochip MC angeordnet, dessen Informationen per Funk von der ersten Antenne AE und der zweite Antenne AZ übertragen werden können. Die erste Antenne AE und die zweite Antenne AZ sind jeweils spiralförmig ausgebildete, wobei die Spirale in der Mitte der beiden Folien beginnt.

Die in Figur 1 gezeigte passive Funkübertragungseinrichtung FU kann mit ihren beiden Folien auf zwei Seiten einer elektrisch leitenden Trägerplatte angeordnet werden. Der Steg ST ist hierzu flexibel ausgebildet, sodass er um die Trägerplatte herumgebogen werden kann. Die äußere Form der ersten Folie und der zweiten Folie sind dabei nicht auf die in Figur 1 gezeigte Rechteckform beschränkt.

Figur 2 zeigt eine Ausführungsform der passiven Funkübertragungseinrichtung FU, bei der auf der ersten Folie FE eine erste Antenne AE und ein Mikrochip MC angeordnet sind und auf der zweiten Folie FZ eine zweite Antenne AZ, ein Kondensator KO und ein Datenspeicher DS angeordnet sind. Die erste Antenne AE und die zweite Antenne AZ sind jeweils als Spirale ausgebildet, die über den Steg ST hinweg in Reihe geschaltet sind. Im Mittelpunkt der ersten Antennen AE ist der Mikrochip MC angeordnet. Im Mittelpunkt der zweiten Antenne AZ sind der Kondensator KO und der Datenspeicher DS angeordnet. Der Datenspeicher DS und der Kondensator KO sind ebenfalls in der Reihenschaltung der ersten Antenne AE, der zweiten Antenne AZ angeordnet.

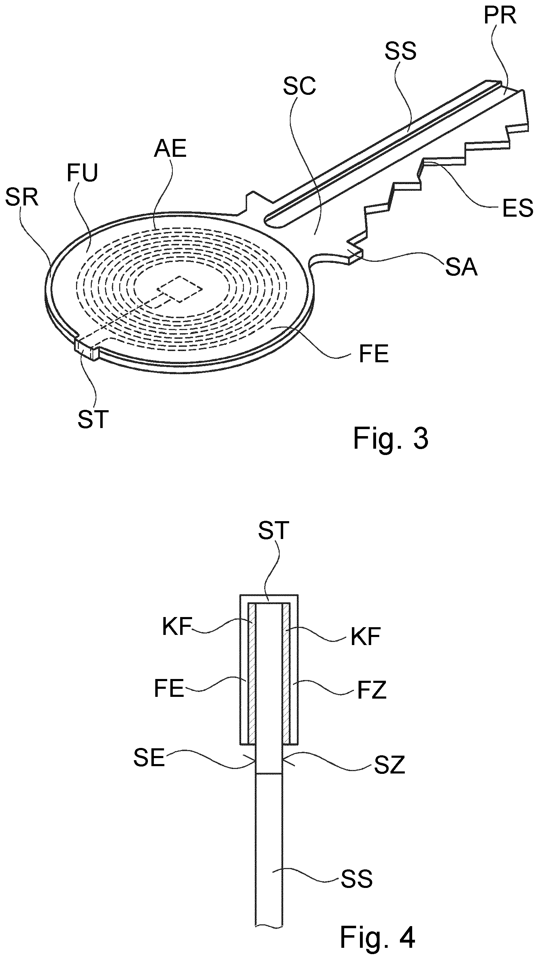

In Figur 3 ist eine passive Funkübertragungseinrichtung FU gezeigt, die auf einer Schlüsselreide SR eines Schlüssels SC angeordnet ist. Der Schlüssel SC umfasst einen Schlüsselschaft FS ein Profil PR, Schlüsseleinschnitte ES, einen Schlüsselanschlag SA und eine Schlüsselreide SR. Der Schlüsselschaft FS, das Profil PR, die Schlüsseleinschnitte ES und der Schlüsselanschlag SA bilden den als Bart bezeichneten Teil des Schlüssels. Die Funkübertragungseinrichtung FU wurde mit der ersten Folie FE auf einer ersten Seite der Schlüsselreide SR angeordnet, anschließend über den Steg ST umgefaltet, sodass die zweite Folie FZ auf der Rückseite SZ der Schlüsselreide SR zu liegen kommt, woraufhin die zweite Folie FZ auf der Rückseite SZ der Schlüsselreide befestigt wurde. Der Steg ST bildet dabei eine Verbindung der auf den zwei gegenüberliegenden Seiten des Schlüssels angeordneten Folien. Durch den flexiblen Steg verlaufen Verbindungsleitungen, die die beiden Antennen miteinander verbinden beziehungsweise die beiden Antennen mit dem Mikrochip verbinden.

In Figur 4 ist der Schlüssel mit Funkübertragungseinrichtung FU aus Figur 3 in einer geschnittenen Darstellung gezeigt. Auf der Vorderseite SE des Schlüssels SC wurde die erste Folie FE mittels einer adhäsiven Schicht KF fixiert. Anschließend wurde die zweite Folie FZ über den Steg ST hinweg auf die Rückseite SZ des Schlüssels SC umgefaltet und zuletzt wurde die zweite Folie FZ über eine adhäsive Schicht KF mit der Rückseite SZ des Schlüssel SC verbunden. Der Steg ST ragt über die Schlüsselreide SR hinaus. Die adhäsiven Schichten KF enden im Bereich des Steges ST, sodass dieser nur um die Materialstärke des Steges ST über die Stirnseite der Schlüsselreide SR hinausragt. Der Schlüsselschaft SS wird von der Funkübertragungseinrichtung FU nicht berührt, sodass der Schlüssel SC auch weiterhin als mechanischer Schlüssel ohne Einschränkung verwendet werden kann. Insbesondere musste der Schlüssel SC aus Figur 3 und Figur 4 nicht mechanisch nachbearbeitet werden. Durch die Anordnung der Funkübertragungseinrichtung FU auf beiden Seiten des Schlüssels, wie in Figur 4 gezeigt, können die erste Antenne AE und die zweite Antenne AZ einen nahezu kugelförmigen Raum um den Schlüssel SC herum mit Funkwellen erreichen. Dabei ist die Orientierung des Schlüssels SC zu einer nicht dargestellten Empfangseinrichtung nahezu ohne Bedeutung für die Funktion der Funkübertragungseinrichtung FU.

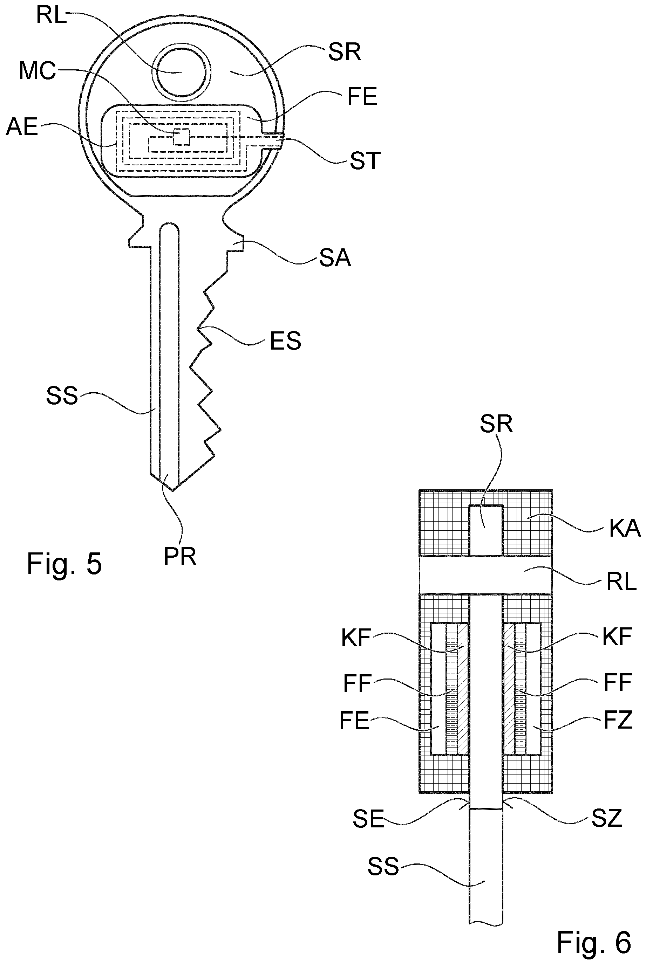

In Figur 5 wurde eine alternative Ausgestaltung der passiven Funkübertragungseinrichtung FU auf einem Schlüssel dargestellt. Die Funkübertragungseinrichtung FU ist dabei so ausgewählt, dass ein Ringloch RL des Schlüssels SC nicht bedeckt wird. Die Funkübertragungseinrichtung FU konnte dennoch auf beiden Seiten der Schlüsselreide SR angeordnet werden, wobei in Figur 5 nur die Vorderseite SE des Schlüssels SC dargestellt ist, auf der die erste Folie FE mit der ersten Antenne AE angeordnet ist. Der Steg ST verbindet die erste Folie FE mit der auf der nicht sichtbaren Rückseite der Schlüsselreide SR angeordneten zweiten Folie FZ. Durch den Steg verläuft eine Verbindungsleitung.

In Figur 6 ist die passive Funkübertragungseinrichtung zur Anordnung auf einem Schlüssel SC aus Figur 5 in einer geschnittenen Ansicht dargestellt. Zwischen die Funkübertragungseinrichtung FU und den Schlüssel SC wurde eine Schicht zum Leiten des magnetischen Flusses in Form einer Ferritfolie FF eingebracht, die mittels einer adhäsiven Schicht KF auf dem Schlüssel befestigt ist. Die Ferritfolie FF dient zum Reflektieren und Verstärken von Funksignalen sowie zur Unterbindung von Wirbelströmen im elektrisch leitenden Schlüssel, wobei die erste Folie FE und die zweite Folie FZ, in der die erste Antenne AE und die zweite Antenne AZ sowie weitere elektronische Bauteile angeordnet sind, als Polymerfolie ausgeführt wurde.

Um die Funkübertragungseinrichtung FU in Figur 6 herum wurde eine Kappe KA angeordnet, die die passive Funkübertragungseinrichtung FU auf dem Schlüssel hält und gegen mechanische Beschädigungen schützt. Die Kappe KA ist dabei aus einem weichelastischen Material ausgebildet, sodass sich die Kappe KA einfach über die Schlüsselreide SR ziehen lässt, das innere der Kappe KA kann wie in der dargestellten Ansicht in Figur 6 einen ausgesparten Raum aufweisen, der die Funkübertragungseinrichtung FU aufnimmt. Da die Funkübertragungseinrichtung FU aber üblicherweise einen Gesamtaufbau im Millimeterbereich aufweist, ist diese Aussparung im Inneren der Kappe KA nicht unbedingt notwendig. Anstelle einer weichelastischen Kappe KA hatte auch eine aus zwei Halbschalen gebildete harte Kappe KA aus Kunststoff verwendet werden können. Das Ringloch RL des Schlüssels SC wird auch durch die Kappe KA ausgespart, sodass das Ringloch weiterhin zur Durchführung eines Schlüsselrings, beispielsweise an einem Schlüsselbund verwendet werden kann.

Durch Abtrennen des Bartes des Schlüssels kann der Schlüssel aus den Figuren 3 bis 6 zu einem Schlüsselanhänger mit passiver Transponderfunktion umgewandelt werden.

Die Beschreibung zu den Figuren 3 bis 6 lässt sich ohne Einschränkungen auf Schlüsselanhänger als Trägerplatten der Funkübertragungseinrichtung erweitern, wobei Schlüsselanhänger im Gegensatz zu mechanischen Schlüsseln von Beginn an keine Bärte aufweisen oder diese entfernt wurden.

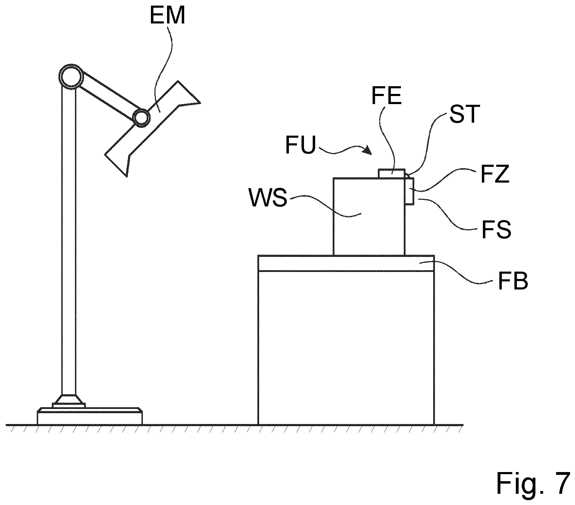

In Figur 7 ist eine passive Funkübertragungseinrichtung mit einer ersten Folie FE, einer zweiten Folie FZ und einem Steg ST gezeigt, die auf einem Werkstück WS angeordnet wurde. Eine Detailansicht der passiven Funkübertragungseinrichtung ist beispielsweise in Figur 2 gezeigt. Das Werkstück befindet sich auf einem Förderband innerhalb einer Produktionsstraße und soll durch einen Empfänger EM identifiziert werden. Der Empfänger ist auf einer Seite des Förderbandes FB angeordnet, sodass sich auf der dem Empfänger EM gegenüberliegenden Seite des Werkstücks ein Funkschatten FS ausbildet.

Die zweite Folie FZ der Funkübertragungseinrichtung FU befindet sich innerhalb dieses Funkschattens und kann somit keine elektromagnetischen Wellen des Empfängers EM empfangen. Die erste Folie FE der Funkübertragungseinrichtung FU wurde allerdings auf einer anderen Seitenfläche des Werkstücks WS angeordnet, die so ausgerichtet ist, dass die elektromagnetischen Wellen des Empfängers EM durch die in der ersten Folie FE angeordnete erste An-tenne AE empfangen werden können. Somit kann die Funkübertragungseinrichtung, mit dem Empfänger kommunizieren und die zur Identifikation relevanten Informationen an den Empfänger senden. Die notwendige Energie zum Senden wandelt die erste Antenne AE in Form eines Induktionsstromes aus den elektromagnetischen Wellen des Empfängers EM, der von einem nicht dargestellten Kondensator KO zum Senden der Informationen zwischengespeichert wird und an den Mikrochip abgegeben wird. Aufgrund der Anordnung der beiden Folien auf zwei Seiten, die unterschiedlich im Raum ausgerichtet sind, ist die Funktion des Transponders von der Lage des Werkstücks WS im Raum nahezu unabhängig und das Werkstück WS kann trotz Funkschatten identifiziert werden.

Die vorstehend und die in den Ansprüchen angegebenen sowie die den Abbildungen entnehmbaren Merkmale sind sowohl einzeln als auch in verschiedener Kombination vorteilhaft realisierbar.

## Patentansprüche

1. Funkübertragungsvorrichtung mit
einer passiven Funkübertragungseinrichtung (FU), die auf einer Vorderseite (SE) und einer Rückseite (SZ) einer elektrisch leitfähigen Trägerplatte angeordnet ist,
wobei die Funkübertragungseinrichtung (FU) auf der Vorderseite (SE) der Trägerplatte eine erste Folie (FE) mit einer ersten Antenne (AE) und einem mit der ersten Antenne (AE) gekoppelten Mikrochip (MC) umfasst und auf der Rückseite (SZ) eine zweite Folie (FZ) mit einer zweiten Antenne (AZ) umfasst,
wobei die erste Folie (FE) mit der zweiten Folie (FZ) über einen flexiblen Steg (ST) verbunden ist, der um eine die Vorderseite (SE) mit der Rückseite (SZ) verbindenden Stirnseite der Trägerplatte geführt ist, so dass die zweite Antenne (AZ) über wenigstens eine entlang des Steges (ST) verlaufenden Verbindungsleitung mit der ersten Antenne (AE) oder dem Mikrochip (MC) verbunden ist, um Information vom Mikrochip (MC) sowohl anhand der ersten Antenne (AE) als auch der zweiten Antenne (AZ) zu übertragen,
wobei die erste Folie (FE), die zweite Folie (FZ) und der Steg (ST) als ein Bauteil zusammengefasst sind,
**dadurch gekennzeichnet, dass**
die Trägerplatte die Schlüsselreide (SR) eines Schlüssels (SC) ist, und wobei
eine Schicht zum Leiten des magnetischen Flusses, die als Ferritfolie (FF) ausgebildet ist, zwischen der Trägerplatte und der Funkübertragungseinrichtung (FU) angeordnet ist.

2. Funkübertragungsvorrichtung nach Anspruch 1,
**dadurch gekennzeichnet, dass** die passive Funkübertragungseinrichtung (FU) auf der ersten Folie (FE) oder der zweiten Folie (FZ) einen Energiespeicher (KO) umfasst, der den Mikrochip (MC) mit elektrischer Energie speist.

3. Funkübertragungsvorrichtung nach einem der Ansprüche 1 bis 2,
**dadurch gekennzeichnet, dass** die passive Funkübertragungseinrichtung (FU) auf der ersten Folie (FE) oder der zweiten Folie (FZ) einen Datenspeicher (DS) umfasst, dessen Daten vom Mikrochip (MC) ausgelesen werden können.

4. Funkübertragungsvorrichtung nach einem der Ansprüche 1 bis 3,
**dadurch gekennzeichnet, dass** die passive Funkübertragungseinrichtung (FU) auf der der Trägerplatte zugewandten Seite mit der Schicht zum Leiten des magnetischen Flusses versehen ist.

5. Funkübertragungsvorrichtung nach einem der Ansprüche 1 bis 4,
**dadurch gekennzeichnet, dass** die passive Funkübertragungseinrichtung (FU) mittels einer adhäsiven Schicht (KF) auf der Trägerplatte befestigt ist.

6. Funkübertragungsvorrichtung nach Anspruch 5,
wobei die adhäsive Schicht (KF) als eine Klebefolie ausgeführt ist.

7. Funkübertragungsvorrichtung nach einem der Ansprüche 1 bis 6,
**dadurch gekennzeichnet, dass** die passive Funkübertragungseinrichtung (FU) mit einer auf der Schlüsselreide (SR) angeordneten Kappe (KA) versehen ist, wobei die Kappe (KA) die Funkübertragungseinrichtung (FU) auf der Trägerplatte hält.

8. Funkübertragungsvorrichtung nach einem der Ansprüche 1 bis 7,
**dadurch gekennzeichnet, dass** bei der passiven Funkübertragungseinrichtung (FU) die erste Antenne (AE) und die zweite Antenne (AZ) in Reihe geschaltet sind oder wobei bei der passiven Funkübertragungseinrichtung (FU) die erste Antenne (AE) und die zweite Antenne (AZ) der Funkübertragungseinrichtung (FU) jeweils mit dem Mikrochip (MC) verbunden sind oder wobei bei der passiven Funkübertragungseinrichtung (FU) die erste Antenne (AE) und die zweite Antenne (AZ) parallel geschaltet sind.

9. Funkübertragungsvorrichtung nach einem der Ansprüche 1 bis 8,
**dadurch gekennzeichnet, dass** bei der passiven Funkübertragungseinrichtung (FU) der flexible Steg (ST) mit einer Breite gewählt ist, sodass die Verbindungsleitung zu allen Seiten hin durch den Steg (ST) vor mechanischen Schädigungen geschützt.

10. Funkübertragungsvorrichtung nach einem der Ansprüche 1 bis 9,
**dadurch gekennzeichnet, dass** bei der passiven Funkübertragungseinrichtung (FU) die erste Folie (FE) und die zweite Folie (FZ) bezüglich ihrer Abmessungen so gewählt sind, dass ein Ringloch (RL) in der Schlüsselreide (SR) des Schlüssels (SC) zugänglich bleibt.

11. Verfahren zum Umrüsten eines mechanischen Schlüssels (SC), umfassend die Schritte:
- Bereitstellen eines mechanischen Schlüssels (SC), der bezüglich seiner Funktion an eine Schließanlage angepasst ist,
- Bereitstellen einer passiven Funkübertragungseinrichtung (FU), die eine erste Folie (FE) mit einer ersten Antenne (AE) und einem mit der ersten Antenne (AE) gekoppelten Mikrochip (MC) umfasst und eine zweite Folie (FZ) mit einer zweiten Antenne (AZ) umfasst, wobei die erste Folie (FE) mit der zweiten Folie (FZ) über einen flexiblen Steg (ST) verbunden sind,
- Anordnen der ersten Folie (FE) der Funkübertragungseinrichtung (FU) auf einer Vorderseite (SE) einer Schlüsselreide (SR) des mechanischen Schlüssels (SC),
- Anordnen der zweiten Folie (FZ) der Funkübertragungseinrichtung (FU) auf der Rückseite (SZ) der Schlüsselreide (SR) des mechanischen Schlüssels (SC), wobei die erste Folie (FE) mit der zweiten Folie (FZ) über einen flexiblen Steg (ST) verbunden ist, der um eine die Vorderseite (SE) mit der Rückseite (SZ) verbindenden Stirnseite des Schlüssels (SC) geführt ist, so dass die zweite Antenne (AZ) über wenigstens eine entlang des Steges (ST) verlaufenden Verbindungsleitung mit der ersten Antenne (AE) oder dem Mikrochip (MC) verbunden ist, um Information vom Mikrochip (MC) sowohl anhand der ersten Antenne (AE) als auch der zweiten Antenne (AZ) zu übertragen, wobei eine Schicht zum Leiten des magnetischen Flusses vorgesehen ist, die als Ferritfolie (FF) ausgebildet ist und die zwischen der Schlüsselreide (SR) und der Funkübertragungseinrichtung (FU) angeordnet ist, und
- Programmieren des Mikrochips (MC) der passiven Funkübertragungseinrichtung (FU) mit einer Zugangsberechtigung.

12. Verfahren nach Anspruch 11,
**dadurch gekennzeichnet, dass** die passive Funkübertragungseinrichtung (FU) mit einer Kappe (KA) versehen wird.

## Claims

1. A radio transmission apparatus with a passive radio transmission device (FU), which is arranged on a front side (SE) and a rear side (SZ) of an electrically conductive carrier plate,
wherein the radio transmission device (FU) comprises on the front side (SE) of the carrier plate a first foil (FE) with a first antenna (AE) and a microchip (MC) coupled to the first antenna (AE) and comprises on the rear side (SZ) a second foil (FZ) with a second antenna (AZ),
wherein the first foil (FE) is connected to the second foil (FZ) via a flexible web (ST), which is guided around an end face of the carrier plate connecting the front side (SE) to the rear side (SZ), so that the second antenna (AZ) is connected to the first antenna (AE) or the microchip (MC) via at least one connecting line running along the web (ST), in order to transmit information from the microchip (MC) using both the first antenna (AE) and the second antenna (AZ),
wherein the first foil (FE), the second foil (FZ) and the web (ST) are combined as one component,
**characterized in that**
the carrier plate is the key blade (SR) of a key (SC), and wherein
a layer for conducting the magnetic flux, which layer is designed as a ferrite foil (FF), is arranged between the carrier plate and the radio transmission device (FU).

2. The radio transmission apparatus according to claim 1,
**characterized in that** the passive radio transmission device (FU) on the first foil (FE) or the second foil (FZ) comprises an energy storage (KO) which supplies the microchip (MC) with electrical energy.

3. The radio transmission apparatus according to any of claims 1 to 2,
**characterized in that** the passive radio transmission device (FU) on the first foil (FE) or the second foil (FZ) comprises a data storage (DS), the data of which can be read out by the microchip (MC).

4. The radio transmission apparatus according to any of claims 1 to 3,
**characterized in that** the passive radio transmission device (FU) is provided with the layer for conducting the magnetic flux on the side facing the carrier plate.

5. The radio transmission apparatus according to any of claims 1 to 4,
**characterized in that** the passive radio transmission device (FU) is fastened to the carrier plate by means of an adhesive layer (KF).

6. The radio transmission apparatus according to claim 5,
wherein the adhesive layer (KF) is designed as an adhesive foil.

7. The radio transmission apparatus according to any of claims 1 to 6,
**characterized in that** the passive radio transmission device (FU) is provided with a cap (KA) arranged on the key blade (SR), wherein the cap (KA) holds the radio transmission device (FU) on the carrier plate.

8. The radio transmission apparatus according to any of claims 1 to 7,
**characterized in that,** with the passive radio transmission device (FU), the first antenna (AE) and the second antenna (AZ) are connected in series, or wherein, with the passive radio transmission device (FU), the first antenna (AE) and the second antenna (AZ) of the radio transmission device (FU) are in each case connected to the microchip (MC), or wherein, with the passive radio transmission device (FU), the first antenna (AE) and the second antenna (AZ) are connected in parallel.

9. The radio transmission apparatus according to any of claims 1 to 8,
**characterized in that,** with the passive radio transmission device (FU), the flexible web (ST) is selected with a width such that the connecting line is protected from mechanical damage on all sides by the web (ST).

10. The radio transmission apparatus according to any of claims 1 to 9,
**characterized in that,** with the passive radio transmission device (FU), the dimensions of the first foil (FE) and the second foil (FZ) are selected such that an annular hole (RL) in the key blade (SR) of the key (SC) remains accessible.

11. A method for converting a mechanical key (SC), comprising the steps of:
- providing a mechanical key (SC) that is adapted to a locking system with respect to its function,
- providing a passive radio transmission device (FU) which comprises a first foil (FE) with a first antenna (AE) and a microchip (MC) coupled to the first antenna (AE) and comprises a second foil (FZ) with a second antenna (AZ), wherein the first foil (FE) is connected to the second foil (FZ) via a flexible web (ST),
- arranging the first foil (FE) of the radio transmission device (FU) on a front side (SE) of a key blade (SR) of the mechanical key (SC),
- arranging the second foil (FZ) of the radio transmission device (FU) on the rear side (SZ) of the key side (SR) of the mechanical key (SC), wherein the first foil (FE) is connected to the second foil (FZ) via a flexible web (ST), which is guided around an end face of the key (SC) connecting the front side (SE) to the rear side (SZ), so that the second antenna (AZ) is connected to the first antenna (AE) or the microchip (MC) via at least one connecting line running along the web (ST), in order to transmit information from the microchip (MC) using both the first antenna (AE) and the second antenna (AZ), wherein a layer is provided for conducting the magnetic flux, which layer is designed as a ferrite foil (FF) and is arranged between the key blade (SR) and the radio transmission device (FU), and
- programming the microchip (MC) of the passive radio transmission device (FU) with an access authorization.

12. The method according to claim 11,
**characterized in that** the passive radio transmission device (FU) is provided with a cap (KA).

## Revendications

1. Dispositif de transmission radio comportant un appareil de transmission radio (FU) passif qui est disposé sur une face avant (SE) et une face arrière (SZ) d'une plaque de support électriquement conductrice,
dans lequel l'appareil de transmission radio (FU) comprend, sur la face avant (SE) de la plaque de support, une première feuille (FE) comportant une première antenne (AE) et une micropuce (MC) couplée à la première antenne (AE) et comprend, sur la face arrière (SZ), une seconde feuille (FZ) comportant une seconde antenne (AZ),
dans lequel la première feuille (FE) est reliée à la seconde feuille (FZ) par l'intermédiaire d'une barrette (ST) flexible qui est guidée autour d'une face frontale de la plaque de support reliant la face avant (SE) à la face arrière (SZ), de sorte que la seconde antenne (AZ) est connectée à la première antenne (AE) ou à la micropuce (MC) par l'intermédiaire d'au moins une ligne de connexion s'étendant le long de la barrette (ST) afin de transmettre des informations de la micropuce (MC) à l'aide aussi bien de la première antenne (AE) que de la seconde antenne (AZ),
dans lequel la première feuille (FE), la seconde feuille (FZ) et la barrette (ST) sont réunies sous la forme d'un composant,
**caractérisé en ce que**
la plaque de support est l'anneau de clé (SR) d'une clé (SC), et dans lequel une couche pour la conduction du flux magnétique, laquelle est réalisée en tant que feuille de ferrite (FF), est disposée entre la plaque de support et l'appareil de transmission radio (FU).

2. Dispositif de transmission radio selon la revendication 1,
**caractérisé en ce que** l'appareil de transmission radio (FU) passif comprend sur la première feuille (FE) ou la seconde feuille (FZ) un accumulateur d'énergie (KO) qui alimente la micropuce (MC) en énergie électrique.

3. Dispositif de transmission radio selon l'une des revendications 1 à 2,
**caractérisé en ce que** l'appareil de transmission radio (FU) passif comprend sur la première feuille (FE) ou la seconde feuille (FZ) une mémoire de données (DS) dont les données peuvent être lues par la micropuce (MC).

4. Dispositif de transmission radio selon l'une des revendications 1 à 3,
**caractérisé en ce que** l'appareil de transmission radio (FU) passif est pourvu de la couche pour la conduction du flux magnétique sur la face tournée vers la plaque de support.

5. Dispositif de transmission radio selon l'une des revendications 1 à 4,
**caractérisé en ce que** l'appareil de transmission radio (FU) passif est fixé sur la plaque de support au moyen d'une couche adhésive (KF).

6. Dispositif de transmission radio selon la revendication 5,
dans lequel la couche adhésive (KF) est conçue en tant que feuille adhésive.

7. Dispositif de transmission radio selon l'une des revendications 1 à 6,
**caractérisé en ce que** l'appareil de transmission radio (FU) passif est pourvu d'un capuchon (KA) disposé sur l'anneau de clé (SR), dans lequel le capuchon (KA) maintient l'appareil de transmission radio (FU) sur la plaque de support.

8. Dispositif de transmission radio selon l'une des revendications 1 à 7,
**caractérisé en ce que,** dans l'appareil de transmission radio (FU) passif, la première antenne (AE) et la seconde antenne (AZ) sont montées en série ou dans lequel, dans l'appareil de transmission radio (FU) passif, la première antenne (AE) et la seconde antenne (AZ) de l'appareil de transmission radio (FU) sont respectivement connectées à la micropuce (MC) ou dans lequel, dans l'appareil de transmission radio (FU) passif, la première antenne (AE) et la seconde antenne (AZ) sont montées en parallèle.

9. Dispositif de transmission radio selon l'une des revendications 1 à 8,
**caractérisé en ce que,** dans l'appareil de transmission radio (FU) passif, la barrette (ST) flexible est choisie avec une largeur telle que la ligne de connexion est protégée de tous les côtés par la barrette (ST) contre les dommages mécaniques.

10. Dispositif de transmission radio selon l'une des revendications 1 à 9,
**caractérisé en ce que,** dans l'appareil de transmission radio (FU) passif, la première feuille (FE) et la seconde feuille (FZ) sont choisies, en ce qui concerne leurs dimensions, de sorte qu'un trou annulaire (RL) dans l'anneau de clé (SR) de la clé (SC) reste accessible.

11. Procédé pour la conversion d'une clé (SC) mécanique, comprenant les étapes consistant à :
- fournir une clé (SC) mécanique dont la fonction est adaptée à une installation de fermeture,
- fournir un appareil de transmission radio (FU) passif qui comprend une première feuille (FE) comportant une première antenne (AE) et une micropuce (MC) couplée à la première antenne (AE) et comprend une seconde feuille (FZ) comportant une seconde antenne (AZ), dans lequel la première feuille (FE) est reliée à la seconde feuille (FZ) par l'intermédiaire d'une barrette (ST) flexible,
- disposer la première feuille (FE) de l'appareil de transmission radio (FU) sur une face avant (SE) d'un anneau de clé (SR) de la clé (SC) mécanique,
- disposer la seconde feuille (FZ) de l'appareil de transmission radio (FU) sur la face arrière (SZ) de l'anneau de clé (SR) de la clé (SC) mécanique, dans lequel la première feuille (FE) est reliée à la seconde feuille (FZ) par l'intermédiaire d'une barrette (ST) flexible qui est guidée autour d'une face frontale de la clé (SC) reliant la face avant (SE) à la face arrière (SZ), de sorte que la seconde antenne (AZ) est connectée à la première antenne (AE) ou à la micropuce (MC) par l'intermédiaire d'au moins une ligne de connexion s'étendant le long de la barrette (ST) afin de transmettre des informations de la micropuce (MC) à l'aide aussi bien de la première antenne (AE) que de la seconde antenne (AZ), dans lequel une couche pour la conduction du flux magnétique est prévue, laquelle est réalisée en tant que feuille de ferrite (FF) et est disposée entre l'anneau de clé (SR) et l'appareil de transmission radio (FU), et
- programmer la micropuce (MC) de l'appareil de transmission radio (FU) passif avec une autorisation d'accès.

12. Procédé selon la revendication 11,
**caractérisé en ce que** l'appareil de transmission radio (FU) passif est pourvu d'un capuchon (KA).
